# EUROPÄISCHE PATENTSCHRIFT

(11) **EP 1 940 661 B1**
(45) Veröffentlichungstag und Bekanntmachung des Hinweises auf die Patenterteilung: **25.05.2011**
(21) Anmeldenummer: 06793914.0
(22) Anmeldetag: 29.09.2006
(51) Int. Cl.: B60S 1/40

(54) **ANSCHLUSSVORRICHTUNG FÜR EINEN WISCHERARM**
CONNECTING DEVICE FOR A WIPER ARM
DISPOSITIF DE RACCORDEMENT D'UN BRAS D'ESSUIE-GLACE

(30) Priorität: 21.10.2005 DE 102005050569
(43) Veröffentlichungstag der Anmeldung: 09.07.2008
(73) Patentinhaber: ROBERT BOSCH GMBH, 70442 Stuttgart (DE)
(72) Erfinder: WILMS, Christian, B-3582 Koersel-Beringen (BE); CLAES, Dave, B-3150 Tildonk (BE)
(86) Internationale Anmeldenummer: PCT/EP2006/066894
(87) Internationale Veröffentlichungsnummer: WO 2007/045549

(56) Entgegenhaltungen:
- DE-A- 10 330 218
- DE-A- 19 924 662
- DE-A1- 10 160 111
- DE-A1- 10 230 457
- DE-A1- 10 330 218
- DE-A1- 10 349 637
- DE-A1- 19 924 662
- DE-A1- 19 924 662
- FR-A1- 2 846 616
- US-A- 2004 074 037
- US-A1- 2004 074 037

## Beschreibung

### Stand der Technik

Die Erfindung betrifft eine Anschlußvorrichtung für einen Wischerarm, sowie ein Flachbalkenwischblatt nach Gattung der unabhängigen Ansprüche.

Aus der DE-A-102 30 457 ist bereits eine Anschlußvorrichtung für einen Wischerarm und ein Wischblatt bekannt, die ein wischblattseitiges erstes Anschlußteil und ein wischarmseitiges zweites Anschlußteil aufweisen, die in Betriebstellung nebeneinander angeordnet sind. Das zweite Anschlußteil weist ein Gelenkelement auf, so dass das Wischblatt um eine Gelenkachse schwenkbar mit dem Wischerarm verbunden ist, wobei ein Sicherungsmittel vorgesehen ist, so dass die beiden Anschlußteile ineinander greifen.

Weiterhin sind zahlreiche Anschlußvorrichtungen für Wischerarme mit Wischblättem bekannt, bei denen das wischarmseitige Anschlußteil über dem wischblattseitigen Anschlußteil angeordnet ist.

Problematisch bei derartigen Anschlußvorrichtungen ist jedoch, dass diese ein ungünstiges Strömungsprofil aufweisen und durch ihre Bauhöhe dem Fahrtwind des Kraftfahrzeugs einen hohen Windwiderstand entgegensetzen. Darüber hinaus muss trotz der flachen Bauweise ein gefälliges Äußeres gewährleistet sein.

### Offenbarung der Erfindung

### Vorteile der Erfindung

Die erfindungsgemäße Anschlußvorrichtung mit den Merkmalen des Hauptanspruchs hat den Vorteil, dass das erste Anschlußteil eine Aufnahme zur Aufnahme des Sicherungsmittels aufweist, in der eine zur Gelenkachse parallele longitudinale Ausformung, insbesondere eine Rille, vorgesehen ist. Auf diese Weise wird ein verbessertes Strömungsverhalten erzielt und eine niedrige Bauhöhe der Anschlußvorrichtung bzw. des Wischerarms mit dem Wischblatt erzielt.

In der Ausführung ist das Sicherungsmittel eine Brücke mit einer Begrenzung. Dadurch ist gewährleistet, dass sich im Betrieb das Wischblatt nicht vom Wischerarm lösen kann.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es hierbei, wenn das Sicherungsmittel das erste Anschlußteil zumindest teilweise übergreift und die Begrenzung derart angeordnet ist, dass in Betriebstellung das erste Anschlußteil und das zweite Anschlußteil gegenüber einem axialen Verschieben auf der Gelenkachse arretiert sind.

Eine einfache Handhabung wird in kostengünstiger Weise dadurch erzielt, dass das erste Anschlußteil vom zweiten Anschlußteil durch eine Drehung zumindest eines der Anschlußteile um das Gelenkelement um einen Lösewinkel lösbar und/oder verbindbar ist. Auf diese Weise ist es möglich, ohne Zuhilfenahme von Werkzeugen oder ohne besondere Kenntnisse das Wischblatt vom Wischerarm zu trennen, bzw. diese zu verbinden, wodurch die Montage insbesondere auch für den Laien, vereinfacht wird.

Weiterhin vorteilhaft ist es, wenn die Begrenzung einen Ansatz zur Festlegung des Lösewinkels aufweist.

Darüber hinaus ist es vorteilhaft, wenn der Lösewinkel zwischen 5 und 50°, insbesondere zwischen 20 und 40° vorzugsweise zwischen 20 und 30°, idealerweise etwa 25° beträgt, da auf diese Weise ein sicherer Halt der Anschlußvorrichtung gewährleistet ist ohne die Handhabung beim Wechsel des Wischblatt zu beeinträchtigen.

Hierbei ist es von besonderem Vorteil, wenn eine Anschlagbegrenzung vorgesehen ist, die insbesondere durch eine Kante oder Fläche der Aufnahme gebildet ist, die eine Drehung über den Lösewinkel hinaus verhindert. Insbesondere wird dadurch ein Wechsel des Wischblatts noch weiter vereinfacht.

Idealerweise ist die longitudinale Ausformung derart dimensioniert, daß sie beim Lösen und/oder Verbinden der Anschlußteile den Ansatz aufzunehmen vermag.

In einer einfachen Ausführung ist vorteilhafter Weise die Aufnahme rillenförmig ausgebildet und umfaßt insbesondere zwei Seitenwände und einen Boden, der insbesondere im Wesentlichen eben ausgebildet ist. Dies ist in einem Spritzgussverfahren einfach zu fertigen und daher überaus kostengünstig.

Hierbei ist es von besonderem Vorteil, wenn die Ausformung am Boden der Aufnahme, insbesondere im Bereich einer der Seitenwände angeordnet ist.

Weiterhin ist es vorteilhaft, wenn das erste Anschlußteil eine Spoilerwand aufweist, die die Gesamthöhe des ersten Anschlußteils bildet und eine Spoilerseite abschließt. Auf diese Weise wird ein besonders strömungsgünstiges Äußeres erzielt und darüber hinaus eine besonders gefällige Optik erreicht.

Besonders einfach, kostengünstig und gefällig schließt das Sicherungsmittel das erste Anschlußteil im Wesentlichen bündig ab.

Ein erfindungsgemäßes Flachbalkenwischblatt mit einem ersten Anschlußteil zum Befestigen des Flachbalkenwischblatts an einem Wischerarm, das ein Gelenkgegenelement umfasst, so dass das Flachbalkenwischblatt um eine Gelenkachse schwenkbar mit dem Wischerarm verbindbar ist, wobei eine rillenförmige Aufnahme zur Aufnahme eines Sicherungsmittels vorgesehen ist, in der eine zur Gelenkachse parallele longitudinale Ausformung vorgesehen ist, weist ein besonders gutes Strömungsverhalten auf, so dass das Wischblatt auch bei hohen Fahrgeschwindigkeiten sicher auf der Scheibe geführt wird. Darüber hinaus ist dadurch eine sichere, zuverlässige und einfach handzuhabende Verbindung mit einem Wischerarm ermöglicht.

Hierbei ist es vorteilhaft, wenn ein Spoiler vorgesehen ist und das erste Anschlußteil eine Spoilerwand aufweist, die den Spoiler in seinem Querschnitt im Wesentlichen aufnimmt und das erste Anschlußteil spoilerseitig abschließt. Auf diese Weise wird das Strömungsverhalten des Flachbalkenwischblatts noch weiter verbessert und damit ein optimales Wischergebnis auch bei hohen Geschwindigkeiten des Fahrzeugs erzielt.

Besonders vorteilhaft ist es hierbei, wenn das Gelenkgegenelement als kreisrunde Öffnung ausgebildet ist, die einen Gelenkbolzen aufzunehmen vermag. Ein derartiges Wischblatt ist schnell und einfach zu wechseln und einfach und kostengünstig in der Herstellung.

### Zeichnungen

Ein Ausführungsbeispiel der Erfindung ist in den Zeichnungen dargestellt und in der nachfolgenden Beschreibung näher erläutert. Es zeigen:
- Figur 1: eine erfindungsgemäße, montierte Anschlußvorrichtung in einer per- spektivischen Darstellung,
- Figur 2: die Anschlussvorrichtung mit erstem und zweitem Anschlußteil aus Fi- gur 1 in einer Draufsicht,
- Figur 3: das freie Ende eines Wischerarms mit dem wischarmseitigen zweiten Anschlussteil der Anschlussvorrichtung in einer perspektivischen Dar- stellung,
- Figur 4: das wischblattseitige, montierte erste Anschlußteil der Anschlussvor- richtung in perspektivischer Darstellung,
- Figur 5: das Anschlussteil aus Figur 4 in einer Seitenansicht,
- Figur 6: das Anschlussteil aus Figur 4 in einer Draufsicht,
- Figur 7: die Anschlussvorrichtung zu Beginn eines Lösevorgangs in perspektivi- scher Darstellung,
- Figur 8: die Anschlussvorrichtung inmitten des Lösevorgangs in perspektivi- scher Darstellung,
- Figur 9: die Anschlussvorrichtung während des Lösevorgangs in einer Seitenan- sicht.

### Beschreibung des Ausführungsbeispiels

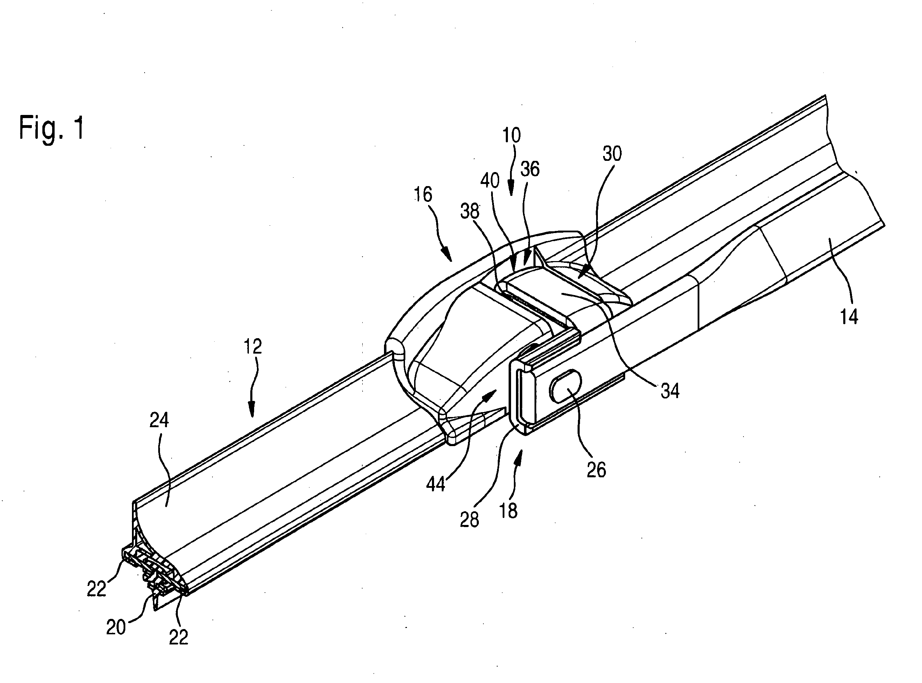

In Figur 1 ist die erfindungsgemäße Anschlußvorrichtung 10 mit einem Abschnitt eines Wischblattes 12 und eines Wischerarmes 14 gezeigt. Die Anschlußvorrichtung 10 umfaßt im Wesentlichen ein erstes Anschlußteil 16, das am Wischblatt 12 befestigt ist, sowie ein zweites Anschlußteil 18, welches am Wischerarm 14 befestigt ist. Das Wischblatt 12 ist als sogenanntes Flachbalkenwischblatt ausgebildet, und umfaßt im Wesentlichen einen Wischgummi 20, der auf einer Federschiene 22 gehaltert ist. Zur Verbesserung der Strömungseigenschaften ist auf der, dem Wischgummi 20 abgewandten Seite der Federschiene 22 ein Spoiler 24 befestigt, insbesondere auf die Federschiene 22 aufgeschoben, der aus einem gummielastischen Material ausgebildet ist. Das erste Anschlußteil 16 ist fest mit der Federschiene 22 verbunden, so daß das Wischblatt 12 am ersten Anschluß 16 sicher gehaltert ist.

Der Wischerarm 14 trägt an seinem freien Ende das zweite Anschlußteil 18, der Wischerarm 14 ist hierbei im Bereich seines freien Endes als einfache Stange ausgebildet, die einen im Wesentlichen rechteckigen Querschnitt aufweist. Die im Querschnitt längere Seite der Stange verläuft senkrecht zur Scheibe, die hier aus Gründen der Übersichtlichkeit nicht gezeichnet ist. Damit verläuft die längere Seite des rechteckigen Querschnitts im Wesentlichen parallel zur Längserstreckung des Querschnitts des Wischblattes 12. Das zweite Anschlußteil 18 ist hier als Blechbiegeteil ausgebildet und umgreift das freie Ende des Wischerarms 14 mit einem ersten Abschnitt 28 klammerartig. Ein zweiter Abschnitt 30 des zweiten Anschlußteils 18 erstreckt sich senkrecht vom freien Ende des Wischerarms 14 in Richtung des ersten Anschlußteils 16 und übergreift dieses brückenartig. Dadurch ist ein Sicherungsmittel 32 gebildet, das durch eine Brücke 34 des zweiten Abschnitts 30 gebildet ist, die von einer Begrenzung 36 abgeschlossen wird. Die Brücke 34 verläuft etwa senkrecht zur Längserstreckung des Wischerarmes 14, parallel zur Oberfläche der Scheibe oder etwa parallel zu der Ebene, die durch die Federschienen 22 gebildet ist.

Das erste Anschlußteil 16 weist zur Aufnahme der Brücke 34 eine Aufnahme 38 und eine Tasche 40 auf, wobei in verbundenem Zustand die Brücke 34 in die Aufnahme 38 und die Begrenzung 36 in die Tasche 40 aufgenommen ist. Dadurch greifen erstes Anschlußteil 16 und zweites Anschlußteil 18 ineinander.

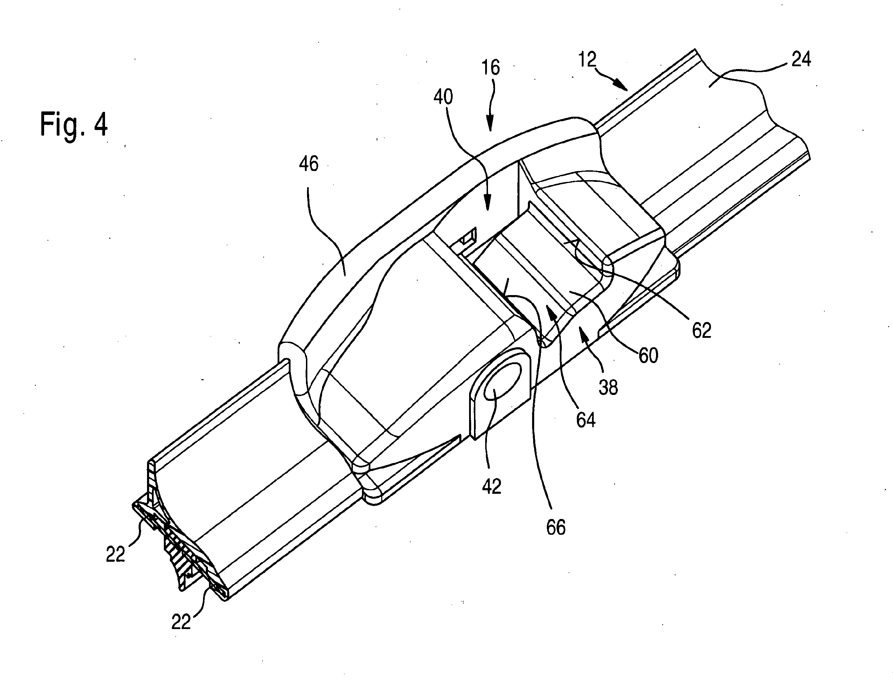

Weiterhin ist am zweiten Anschlußteil 18 ein Bolzen 26 vorgesehen, der sich in Richtung der Längserstreckung des Wischerarms 14 beabstandet von der Brücke 34 erstreckt. Die Längserstreckung des Bolzens 26 verläuft senkrecht zur Längserstreckung des Wischerarmes 14 und damit etwa parallel zur Brücke 34. Der Bolzen 34 greift in ein Gelenkgegenelement 42, das als Sackloch ausgebildet ist (Figur 4), ein, wodurch ein Gelenkelement 44 gebildet ist. Das erste Anschlußteil 16 ist damit mit dem zweiten Anschlußteil 18 drehbeweglich verbunden.

Der Bolzen 26 ist hierbei derart ausgebildet, daß er einerseits das zweite Anschlußteil 18 am freien Ende des Wischerarms 14 befestigt und gleichzeitig Teil des Gelenkelements 44 ist.

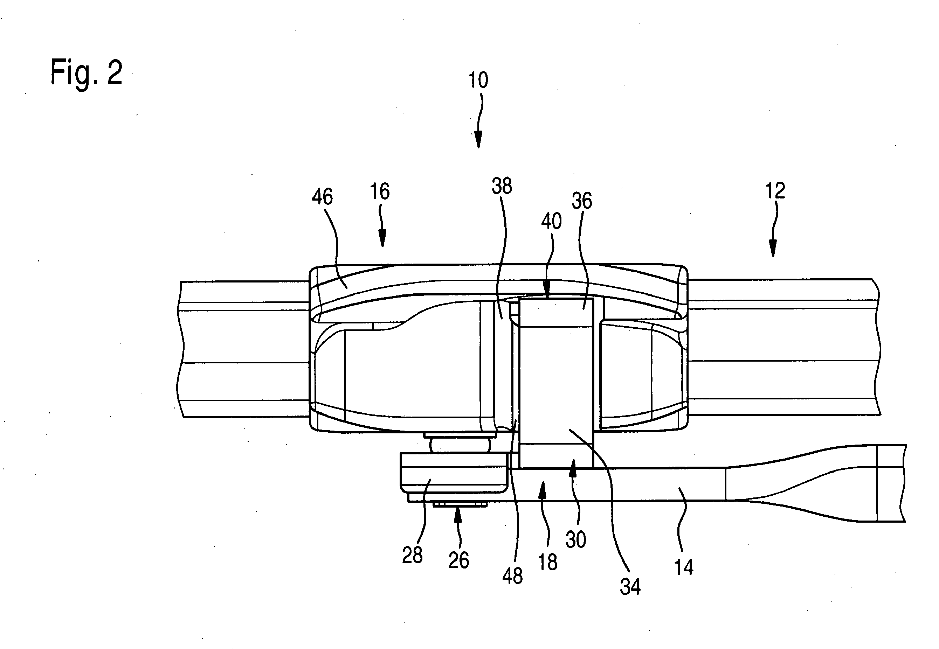

In Figur 2 ist die erfindungsgemäße Anschlußvorrichtung 10 sowie das Wischblatt 12 und dem freien Ende des Wischerarms 14 in einer Draufsicht gezeigt. Das freie Ende des Wischerarms 14 ist in seiner rechteckigen Gestalt senkrecht zur Scheibenebene, die hier der Ebene des Blattes entspricht, gezeichnet. Daran befestigt ist das zweite Anschlußteil 18, mit seinem ersten Abschnitt 28 und seinem zweiten Abschnitt 30. Der erste Abschnitt 28 umklammert das freie Ende des Wischerarms 14 und ist durch den Bolzen 26 am Wischerarm 14 befestigt. Der Bolzen 26 ragt, hier nicht sichtbar, in das erste Anschlußteil 16 hinein. Von dieser Gelenkachse, die durch den Bolzen 26 gebildet wird, beabstandet, ist der zweite Abschnitt 30 mit dem Sicherungsmittel 32 angeordnet. Das Sicherungsmittel umfaßt die Brücke 34, die durch die Begrenzung 36 begrenzt wird. Die Brücke 34 ist hierbei in die Aufnahme 38 des ersten Anschlußteils 16 eingefügt, so daß sich eine im Wesentlichen glatte Oberfläche des ersten Anschlußteils 16 ergibt. Die Begrenzung 36 ist in die Tasche 40 des ersten Anschlußteils eingefügt. Im Bereich der Tasche 40 weist das erste Anschlußteil 16 darüber hinaus eine Spoilerwand 46 auf, die das erste Anschlußteil 16 im Wesentlichen abschließt. Auf der der Gelenkachse und damit dem Bolzen 26 zugewandten Seite der Aufnahme 38, ist die Aufnahme 38 so viel breiter als die Brücke 34, das ein Spalt 48 entsteht, und zwar so, dass das zweite Anschlußteil 18 um einen Lösewinkel 50 gegenüber dem ersten Anschlußteil 16 um die Gelenkachse gedreht werden kann.

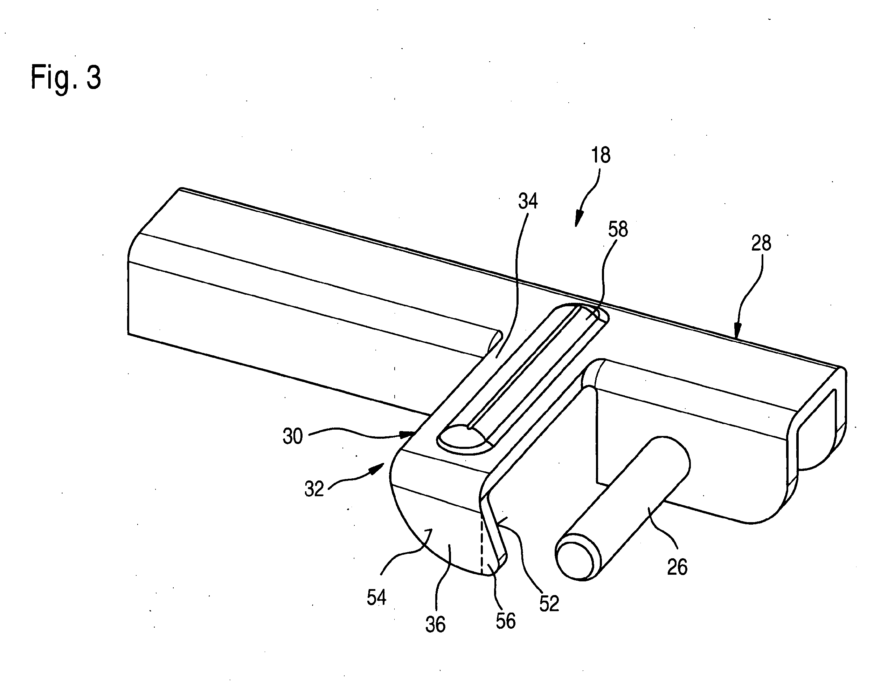

In Figur 3 ist das zweite Anschlußteil 18 einer erfindungsgemäßen Anschlußvorrichtung 10 in einer Variation gezeigt, die jedoch funktional identisch aufgebaut ist. Die gleichen Elemente wurden deshalb auch mit den gleichen Bezugsziffern versehen. Am ersten Abschnitt 28 des zweiten Anschlußteils 18 ist der Bolzen 26, der die Gelenkachse bildet, befestigt. Hiervon beabstandet ist das Sicherungsmittel 32, welches im Wesentlichen die Brücke 34 und die Begrenzung 36 umfaßt. Die Begrenzung 36 ragt senkrecht nach unten und ist einstückig mit der Brücke 34 ausgebildet. Dadurch sind an der Begrenzung 36 eine Innenwand 52 sowie eine Außenwand 54 gebildet. Die Innenwand 52 und die Außenwand 54 begrenzen damit die axiale Beweglichkeit auf der Gelenkachse, in dem sie Anschläge in der Tasche 40 des ersten Anschlußteils 16 bilden.

Weiterhin weist die Begrenzung 36 zur Stabilisierung und Verbesserung der Befestigung einen Ansatz 56 auf, der die Begrenzung 36 in Richtung des Bolzens 26 und damit in Richtung der Gelenkachse vergrößert. Zur Stabilisierung ist auf der Brücke 34 noch eine Erhöhung 58 ausgebildet, die die Biegesteifigkeit der Brücke 34 erhöht. Typischerweise ist die Erhöhung 58 direkt aus dem Blech der Brücke 34 herausgebogen. In einer Variation der Erfindung kann die Erhöhung 58 auch nach unten, also als Vertiefung ausgebildet sein.

In Figur 4 ist das erste Anschlußteil 16 einer erfindungsgemäßen Anschlußvorrichtung 10 mit dem Wischblatt 12 in perspektivischer Darstellung gezeigt. Das Wischblatt 12 umfaßt einen Spoiler 24, der an der Federschiene 22 befestigt ist. Ebenso wie der Spoiler 24 ist auch das erste Anschlußteil 16 an der Federschiene 22 befestigt. In einer Variation kann das erste Anschlußteil 16 auch am Spoiler 24 befestigt sein. Das erste Anschlußteil 16 weist eine Öffnung als Gelenkgegenelement 42 auf, die zur Aufnahme des Bolzens 26 dient, so daß zusammen mit dem Bolzen 26 ein Gelenkelement 44 (Figur 1) gebildet ist. Die Öffnung 42 kann hier als durchgehendes Loch, oder als Sackloch ausgeführt sein.

Von deren Gelenkachse, die durch den Bolzen 26 und das Gelenkgegenelement 42 gebildet ist, beabstandet ist die Aufnahme 38, die in montiertem Zustand die Brücke 34 aufzunehmen vermag. Die Aufnahme 38 umfaßt hierbei einen Boden 60, sowie eine erste Seitenwand 62 und eine zweite Seitenwand 64, die auf der dem Gelenkelement 44 zugewandten Seite der Aufnahme 38 angeordnet ist. Der Boden 60 der Aufnahme 38 weist im Bereich der zweiten Seitenwand 64 eine longitudinale Ausformung 66 auf, die parallel zur Gelenkachse und damit parallel zum Gelenkgegenelement 42 verläuft. Hierbei reicht die longitudinale Ausformung 66, genauso wie die Aufnahme 38 von der Tasche 40 bis zur äußeren Begrenzung des ersten Anschlußteils 16, so daß der Ansatz 56 des zweiten Anschlußteils durch die longitudinale Ausformung 66 zu gleiten vermag. Die Tasche 40 folgt in ihrer inneren Kontur der Begrenzung 36 mit dem Ansatz 56 des zweiten Anschlußteils 18.

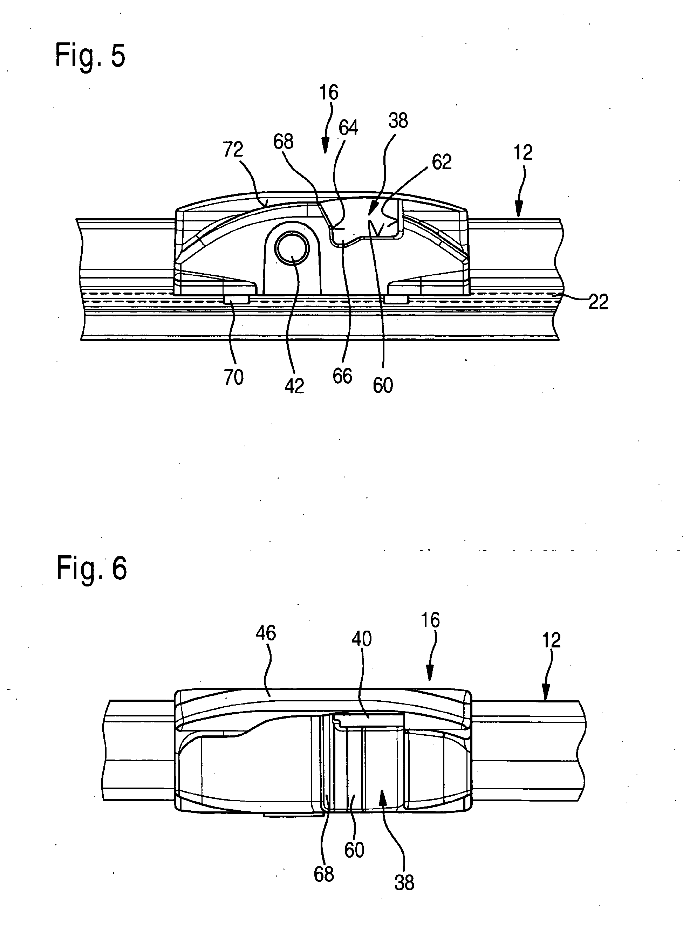

In Figur 5 ist das Wischblatt 12 mit dem ersten Anschlußteil 16 der erfindungsgemäßen Anschlußvorrichtung 10 in einer Seitenansicht gezeigt. Die Ansicht ist hierbei von der Seite vorgenommen, auf der in montiertem Zustand der Wischarm 14, beziehungsweise das zweite Anschlußteil 18 angeordnet sind. Im Querschnitt weist das erste Anschlußteil 16 eine schildkrötenförmige, buckelförmige Oberseite 72 auf, die auf einer Seite durch die Spoilerwand 46 abgeschlossen ist. Die Spoilerwand 46 ragt hierbei über die schildkrötenförmige Oberfläche 72 hinaus. Das Gelenkgegenelement 42, welches zur Aufnahme des Bolzens 26 (Figur 1) dient, ist von der Aufnahme 38 in Längsrichtung des Wischblattes 12 beabstandet angeordnet. Die Aufnahme 38 umfasst den Boden 60, die erste Seitenwand 62 und die zweite Seitenwand 64. Im Bereich der zweiten Seitenwand 64 ist im Boden 60 die longitudinale Ausformung 66 vorgesehen, die sich nach unten in Richtung der Federschiene 22 erstreckt. Die erste Seitenwand 62 verläuft im Wesentlichen senkrecht zum Boden 60. Die zweite Seitenwand 64 schließt damit dem Boden 60 einen Winkel von über 90°, insbesondere über 100° ein. Auf diese Weise ergibt sich eine rillenförmige longitudinale Ausformung 66, durch die bei der Montage der Ansatz 56 der Begrenzung 36 des zweiten Anschlußteils 18 geführt werden kann. Die Tiefe der Aufnahme 38 bzw. die Höhe der ersten Seitenwand 62 ist hier bei der Art dimensioniert, daß die Brücke 34 des Sicherungsmittels 32 des zweiten Anschlußteils 18 vollständig aufgenommen werden kann, so daß die schildkrötenförmige, gekrümmte Oberseite des ersten Anschlußteils 16 gerade etwa bündig, bis auf den Spalt 48, abgeschlossen wird.

Der Boden 60 und die Brücke 34 weisen hierbei eine Breite zwischen 3 mm und 15 mm, insbesondere zwischen 5mm und 10 mm, vorzugsweise zwischen 7mm und 9mm, idealerweise 8 mm auf. Die Brücke 34 weist hierbei eine Länge zwischen 10 mm und 30 mm, insbesondere zwischen 15 mm und 25 mm, vorzugsweise zwischen 18 mm und 23 mm, idealerweise etwa 22 mm auf. Durch diese Maße wird eine ausreichende Stabilität bei einer besonders kompakten Bauweise erzielt.

Im oberen, der longitudinalen Ausformung 66 abgewandten Bereich der zweiten Seitenwand 64 ist eine Kante 68 durch einen Flächenabschnitt gebildet, so dass die Brücke 34 beim Drehen gegenüber dem ersten Anschlußteil 16 nicht über einen vorbestimmten Lösewinkel 50 hinaus gedreht werden kann. Somit ist eine Anschlagsbegrenzung gebildet, die ein einfaches Lösen der beiden Anschlußteile 16, 18 bewirkt, die zweite Seitenwand 64 kann auch einen ersten Abschnitt und einen zweiten Abschnitt umfassen, wobei der erste Abschnitt etwa senkrecht aus dem Boden 60 ragt und der sich an den ersten Abschnitt anschließende zweite Abschnitt einen Öffnungswinkel von mehr als 180 Grad mit dem Boden 60 einschließt. Die Breite des Bodens 60 wird dann etwa so groß wie die Breite der Brücke 34 gewählt, wobei der Spalt 48 durch den Öffnungswinkel des zweiten Abschnitts gebildet wird.

Das erste Anschlußteil 16 ist durch Klammerelemente 70 an der Federschiene 22 festgeklammert. Die longitudinale Ausformung 66 ist hierbei zusammen mit dem Ansatz 56 des zweiten Anschlußteils 18 (Figur 3) so dimensioniert, daß der Lösewinkel 50 etwa 25 Grad beträgt, d. h. dass durch eine Drehung des ersten Anschlußteils 16 bezüglich des zweiten Anschlußteils 18 um 25 Grad die axiale Arretierung des Gelenkelements 44 aufgehoben wird, da die Begrenzung 36 sich im Querschnitt vollständig innerhalb der Aufnahme 38 mit der longitudinalen Ausformung 66 befindet. Damit kann durch eine axiale Verschiebung auf der Gelenkachse bzw. auf dem Bolzen 26 das erste Anschlußteil 16, vom zweiten Anschlußteil 18 gelöst werden.

In Figur 6 ist das erste Anschlußteil 16 der erfindungsgemäßen Anschlußvorrichtung 10 mit dem Wischerblatt 12 in einer Draufsicht gezeigt. Die schildkrötenförmige Oberfläche 72 des ersten Anschlußteils 16 wird durch die Aufnahme 38 unterbrochen. Entlang der Längserstreckung der Aufnahme 38 ist diese an einem Ende durch die Spoilerwand 46 begrenzt. Zwischen Spoilerwand 46 und Aufnahme 38 ist die Tasche 40 angeordnet, die die Begrenzung 36 mit dem Ansatz 56 des zweiten Anschlußteiles aufzunehmen vermag.

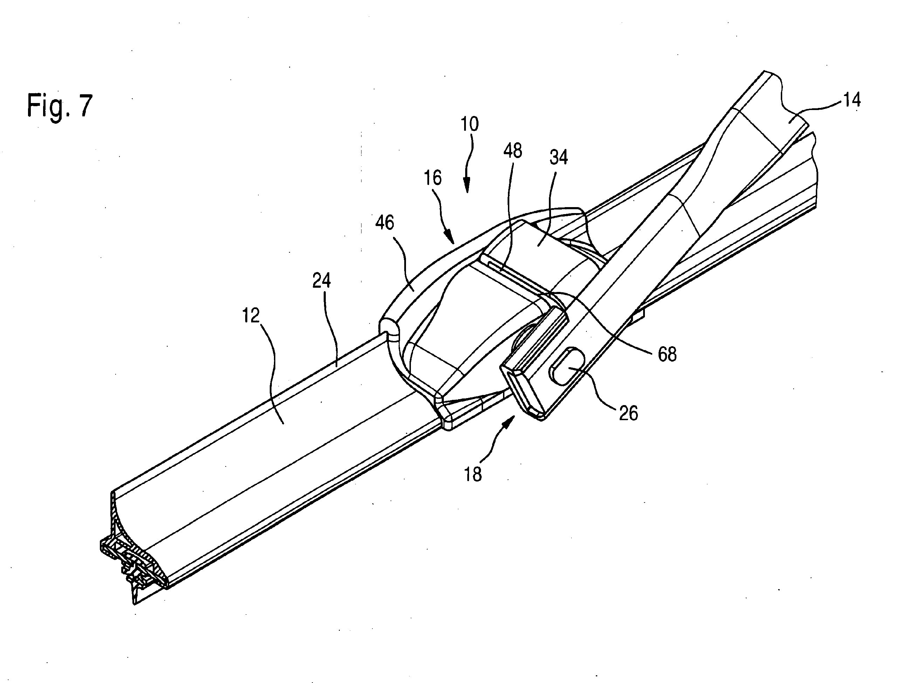

In Figur 7 ist die erfindungsgemäße Anschlußvorrichtung 10 sowie das freie Ende des Wischerarms 14 und das Wischblatt 12 in der Löseposition, d. h. in der Position, in der die beiden Anschlußteile 16, 18 gelöst werden können, gezeigt. Die Brücke 34 ist hierbei bis zur Kante 68 durch eine Drehung um die Gelenkachse bzw. um den Bolzen 26 verkippt, so daß die Brücke 34 an der Kante 68 anschlägt. Die Spoilerwand 46 schmiegt sich hier über den Spoiler 24 und überragt den Spoiler 24 ein wenig. Der Spoiler 24 ist auf diese Weise in die Spoilerwand 46 integriert.

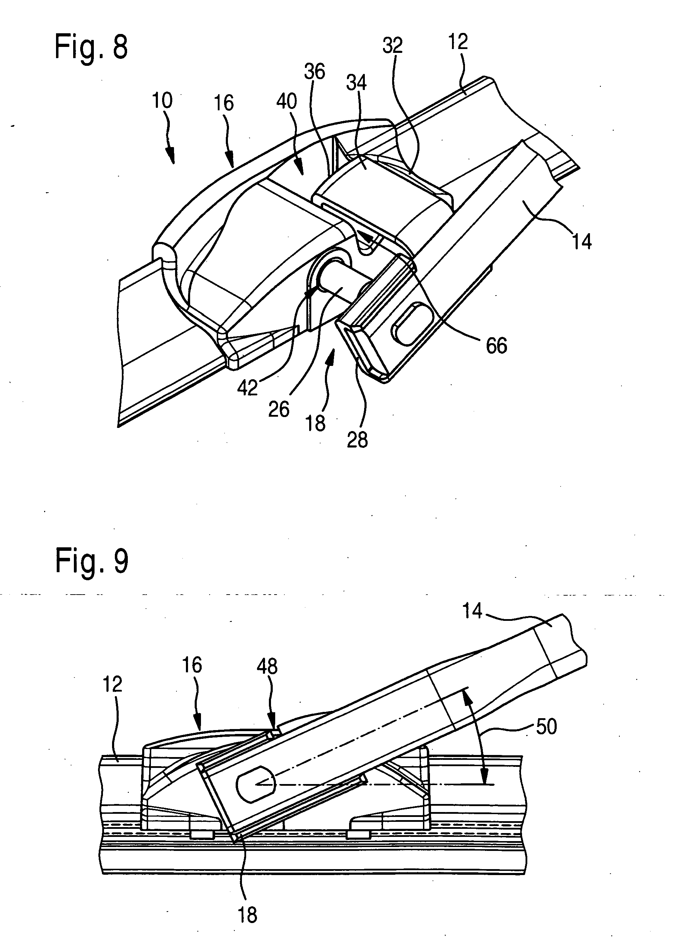

In Figur 8 ist eine erfindungsgemäße Anschlußvorrichtung 10 während des Lösevorgangs gezeigt. Das erste Anschlußteil 16 ist am Wischblatt 12 befestigt und das zweite Anschlußteil 18 ist am Wischerarm 14 befestigt. Das zweite Anschlußteil 18 umgreift den Wischerarm 14 mit seinem u-förmigen ersten Abschnitt 28. Aus der Basis des u-förmigen Abschnitts 28 ragt der Bolzen 26 senkrecht zur Längserstreckung des Wischerarms 14 in die Öffnung des ersten Anschlußteils 16, die das Gelenkgegenelement 42 bildet, hinein. Der zweite Abschnitt 30 des zweiten Anschlußteils 18, der aus dem Sicherungsmittel 32 mit der Brücke 34 und der Begrenzung 36 gebildet ist, ist hier um den Lösewinkel 50 verdreht gezeichnet, so daß die Begrenzung 36 durch die Drehung um das Gelenkelement 44, aus der Tasche 40 herausgezogen ist. Die Begrenzung 36 gleitet beim axialen Verschieben der beiden Anschlußteil 16, 18 durch die Aufnahme 38, wobei der Ansatz 56 (Figur 3) sich durch die longitudinale Ausformung 66 bewegt. Das erste Anschlußteil 16 und das zweite Anschlußteil 18 greifen so nicht mehr ineinander.

In Figur 9 ist die Anschlußvorrichtung 10 aus Figur 8 während des Lösens in einer Seitenansicht gezeigt. Der Wischerarm 14, der das zweite Anschlußteil 18 trägt und das Wischblatt 12, das das erste Anschlußteil 16 trägt, sind um den Lösewinkel 50 von etwa 25 Grad verdreht. Auf diese Weise ist die Begrenzung 36 mit dem Ansatz 56 aus der Tasche 40 herausgezogen, so daß das Wischblatt 12 vom Wischerarm 14 durch eine axiale Verschiebung auf der Gelenkachse abnehmbar ist. Wie in Figur 8 beschrieben, bewegt sich dann der Ansatz 56 durch die longitudinale Ausformung 66 und der übrige Bereich der Begrenzung 36 durch die im Querschnitt im Wesentlichen u-förmige Aufnahme 38. Der Spalt 48 ist in diesem Fall nur noch sehr klein bzw. gleich 0, da die Brücke 34 in dieser Position an der Anschlagsbegrenzung, die durch die Kante 68 gebildet ist, anschlägt.

Das erste Anschlußteil ist hierbei als Kunststoff-Spritzgussteil ausgebildet. Dieses kann auch durch ein zusätzliches Blechbiegeteil verstärkt werden oder aus faserverstärktem Kunststoff ausgebildet sein. Auch eine Ausbildung des gesamten ersten Anschlußteils als Blechbiegeteil ist möglich. Das zweite Anschlußteil 18 ist als Blechbiegeteil ausgebildet und am freien Ende des Wischerarms 14 verprägt, vercrimpt oder verklebt. Ebenso ist es möglich, wie hier gezeigt, das zweite Anschlußteil 18 derart auszuführen, daß es formschlüssig und/oder kraftschlüssig auf dem freien Ende des Wischerarms 14 befestigt ist. Zusätzlich kann der Bolzen 26 das freie Ende des Wischerarms 14 durchgreifen und an diesem verstemmt oder in sonstiger Weise, beispielsweise durch Laser- oder Induktionsschweißen, befestigt werden. Insbesondere kann die Befestigung derart erfolgen, daß bei einem bloßen Formschluß zwischen dem freien Ende des Wischerarms 14 und dem zweiten Anschlußteil 18 dieser noch durch den Bolzen 26 arretiert wird. In einer einfachen und kostengünstigen Variation kann natürlich auch das zweite Anschlußteil aus Kunststoff oder faserverstärkten Kunststoff ausgebildet sein. Auch eine Kombination als Kunststoffteil mit einer Blechverstärkung ist möglich.
In einer weiteren Variation können gummielastische Dämpfungselemente im Bereich der Tasche 40 und/oder im wischarmseitigen Bereich der Brücke 34 angeordnet sein, um Geräusche im Wischbetrieb zu minimieren und/oder Toleranzen auszugleichen.

## Patentansprüche

1. Anschlußvorrichtung (10) für einen Wischerarm (14) und ein Wischblatt (12), mit einem wischblattseitigen ersten Anschlußteil (16) und einem wischarmseitigen zweiten Anschlußteil (18) die in Betriebsstellung nebeneinander angeordnet und über ein Gelenkelement (44) um eine Gelenkachse schwenkbar verbunden sind und teilweise zumindest durch ein Sicherungsmittel (32) ineinander greifen, wobei das Sicherungsmittel (32) eine Brücke (34) wobei und eine Begrenzung 36 umfasst, wobei das erste Anschlußteil (16) eine Aufnahme (38) zur Aufnahme der Brücke (34) des Sicherungsmittels (32) aufweist, in der eine zur Gelenkachse parallele, longitudinale Ausformung (66), insbesondere eine Rille, vorgesehen ist **dadurch gekennzeichnet, daß** ein Ansatz (56) der Begrenzung (36) beim Lösen der Verbindung durch die longititudinale Ausformung (66) gleiten vermag.

2. Anschlußvorrichtung (10) nach Anspruch 1, **dadurch gekennzeichnet, daß** das Sicherungsmittel (32) das erste Anschlußteil (16) zumindest teilweise übergreift und die Begrenzung (36) derart angeordnet ist, daß in Betriebsstellung das erste Anschlußteil (16) und das zweite Anschlußteil (18) gegenüber einem axialen Verschieben auf der Gelenkachse arretiert sind.

3. Anschlußvorrichtung (10) nach einem der vorhergehenden Ansprüche, **dadurch gekennzeichnet, daß** das erste Anschlußteil (16) vom zweiten Anschlußteil (18) durch mindestens eine Drehung zumindest eines der Anschlußteile (16, 18) um das Gelenkelement (44) um mindestens einen Lösewinkel (50) lösbar und/oder verbindbar ist.

4. Anschlußvorrichtung (10) nach Anspruch 3, **dadurch gekennzeichnet, daß** die Begrenzung (36) einen Ansatz (56) zur Festlegung des Lösewinkels (50) aufweist, der zwischen 15 und 50 Grad, insbesondere zwischen 20 und 40 Grad, vorzugsweise zwischen 20 und 30 Grad, idealerweise etwa 25 Grad beträgt.

5. Anschlußvorrichtung (10) nach Anspruch 4, **dadurch gekennzeichnet, daß** eine Anschlagbegrenzung (36) vorgesehen ist, die insbesondere durch eine Kante (68) oder Fläche der Aufnahme (38) gebildet ist, die eine Drehung über den Lösewinkel (50) hinaus verhindert.

6. Anschlußvorrichtung (10) nach Anspruch 4 und/oder 5, **dadurch gekennzeichnet, daß** der Ansatz (56) derart dimensioniert ist, daß die longitudinale Ausformung (66) derart dimensioniert ist, daß sie beim Lösen und/oder Verbinden der Anschlußteile (16, 18) den Ansatz (56) aufzunehmen vermag.

7. Anschlußvorrichtung (10) nach einem der vorhergehenden Ansprüche, **dadurch gekennzeichnet, daß** die Aufnahme (38) rillenförmig ausgebildet ist, insbesondere zwei Seitenwände (62, 64) und einen Boden (60), der insbesondere im wesentlichen eben ausgebildet ist, aufweist.

8. Anschlußvorrichtung (10) nach Anspruch 7, **dadurch gekennzeichnet, daß** die Ausformung (66) am Boden (60), insbesondere im Bereich einer der Seitenwände (62, 64) angeordnet ist.

9. Anschlußvorrichtung (10) nach einem der vorhergehenden Ansprüche, **dadurch gekennzeichnet, daß** das erste Anschlußteil (16) eine Spoilerwand (46) aufweist, die die Gesamthöhe des ersten Anschlußteils (16) bildet und eine Spoilerseite abschließt.

10. Anschlußvorrichtung (10) nach einem der vorhergehenden Ansprüche, **dadurch gekennzeichnet, daß** das Sicherungsmittel (32) das erste Anschlußteil (16) im wesentlichen bündig abschließt.

11. Flachbalkenwischblatt (12), insbesondere für ein Kraftfahrzeug, für eine Anschlußvorrichtung (10) nach einem der vorhergehenden Ansprüche.

## Claims

1. Connecting device (10) for a wiper arm (14) and a wiper blade (12), with a first connecting part (16) on the wiper blade and a second connecting part (18) on the wiper arm, which connecting parts are arranged next to each other in the operating position and are connected pivotably about a hinge axis via a hinge element (44) and partially engage one inside the other at least by means of a securing means (32), wherein the securing means (32) comprises a bridge (34) and a limit stop (36), wherein the first connecting part (16) has a receptacle (38) for receiving the bridge (34) of the securing means (32), in which receptacle a longitudinal formation (66), in particular a groove, is provided parallel to the hinge axis, **characterized in that** an extension (56) of the limit stop (36) can slide through the longitudinal formation (66) when the connection is released.

2. Connecting device (10) according to Claim 1, **characterized in that** the securing means (32) at least partially engages over the first connecting part (16), and the limit stop (36) is arranged in such a manner that, in the operating position, the first connecting part (16) and the second connecting part (18) are locked with respect to axial displacement on the hinge axis.

3. Connecting device (10) according to one of the preceding claims, **characterized in that** the first connecting part (16) can be released from and/or connected to the second connecting part (18) by at least one rotation of at least one of the connecting parts (16, 18) by at least one release angle (50) about the hinge element (44).

4. Connecting device (10) according to Claim 3, **characterized in that** the limit stop (36) has an extension (56) for defining the release angle (50) which is between 15 and 50 degrees, in particular between 20 and 40 degrees, preferably between 20 and 30 degrees, and ideally approximately 25 degrees.

5. Connecting device (10) according to Claim 4, **characterized in that** a limit stop (36) is provided, the limit stop being formed in particular by an edge (68) or surface of the receptacle (38) and preventing rotation beyond the release angle (50).

6. Connecting device (10) according to Claim 4 and/or 5, **characterized in that** the extension (56) is dimensioned in such a manner that the longitudinal formation (66) is dimensioned in such a manner that it can receive the extension (56) upon release and/or connection of the connecting parts (16, 18).

7. Connecting device (10) according to one of the preceding claims, **characterized in that** the receptacle (38) is designed in the form of a groove, and in particular has two side walls (62, 64) and a base (60) which in particular is of substantially planar design.

8. Connecting device (10) according to Claim 7, **characterized in that** the formation (66) is arranged on the base (60), in particular in the region of one of the side walls (62, 64).

9. Connecting device (10) according to one of the preceding claims, **characterized in that** the first connecting part (16) has a spoiler wall (46) which forms the overall height of the first connecting part (16) and ends a spoiler side.

10. Connecting device (10) according to one of the preceding claims, **characterized in that** the securing means (32) ends the first connecting part (16) in a substantially flush manner.

11. Flat beam wiper blade (12), in particular for a motor vehicle, for a connecting device (10) according to one of the preceding claims.

## Revendications

1. Dispositif de raccordement (10) d'un bras d'essuie-glace (14) et d'un balai d'essuie-glace (12), comprenant une première partie de raccordement (16) du côté du balai d'essuie-glace et une deuxième partie de raccordement (18) du côté du bras d'essuie-glace, qui sont disposées l'une à côté de l'autre dans la position de fonctionnement et qui sont connectées par le biais d'un élément d'articulation (44) de manière à pouvoir pivoter autour d'un axe d'articulation, et qui viennent en prise l'une dans l'autre en partie au moins à travers un moyen de fixation (32), le moyen de fixation (32) comprenant un pont (34) et une limitation (36), la première partie de raccordement (16) présentant un logement (38) pour recevoir le pont (34) du moyen de fixation (32), dans lequel est prévue une formation longitudinale (66), en particulier une gorge, parallèle à l'axe d'articulation, **caractérisé en ce qu'**un nez (56) de la limitation (36) peut glisser à travers la formation longitudinale (66) en cas de desserrage de la connexion.

2. Dispositif de raccordement (10) selon la revendication 1, **caractérisé en ce que** le moyen de fixation (32) vient en prise au moins en partie par dessus la première partie de raccordement (16) et la limitation (36) est disposée de telle sorte que dans la position de fonctionnement, la première partie de raccordement (16) et la deuxième partie de raccordement (18) soient bloquées pour empêcher un déplacement axial sur l'axe d'articulation.

3. Dispositif de raccordement (10) selon l'une quelconque des revendications précédentes, **caractérisé en ce que** la première partie de raccordement (16) peut être détachée de la deuxième partie de raccordement (18) par au moins une rotation d'au moins l'une des parties de raccordement (16, 18) autour de l'élément d'articulation (44) suivant au moins un angle de desserrage (50), et/ou peut être connectée à celle-ci.

4. Dispositif de raccordement (10) selon la revendication 3, **caractérisé en ce que** la limitation (36) présente un nez (56) pour fixer l'angle de desserrage (50), lequel est compris entre 15 et 50 degrés, en particulier entre 20 et 40 degrés, de préférence entre 20 et 30 degrés, et de manière idéale vaut environ 25 degrés.

5. Dispositif de raccordement (10) selon la revendication 4, **caractérisé en ce qu'**une limitation de butée (36) est prévue, laquelle est formée en particulier par une arête (68) ou une surface du logement (38), qui empêche une rotation au-delà de l'angle de desserrage (50).

6. Dispositif de raccordement (10) selon la revendication 4 et/ou 5, **caractérisé en ce que** le nez (56) est dimensionné de telle sorte que la formation longitudinale (66) soit dimensionnée de telle sorte qu'elle puisse recevoir le nez (56) en cas de desserrage et/ou de connexion des parties de raccordement (16, 18).

7. Dispositif de raccordement (10) selon l'une quelconque des revendications précédentes, **caractérisé en ce que** le logement (38) est réalisé en forme de gorge, en particulier présente deux parois latérales (62, 64) et un fond (60) qui est réalisé notamment de manière essentiellement plane.

8. Dispositif de raccordement (10) selon la revendication 7, **caractérisé en ce que** la formation (66) est disposée sur le fond (60), en particulier dans la région de l'une des parois latérales (62, 64).

9. Dispositif de raccordement (10) selon l'une quelconque des revendications précédentes, **caractérisé en ce que** la première partie de raccordement (16) présente une paroi de déflexion (46) qui forme la totalité de la hauteur de la première partie de raccordement (16) et qui termine un côté de déflecteur.

10. Dispositif de raccordement (10) selon l'une quelconque des revendications précédentes, **caractérisé en ce que** le moyen de fixation (32) termine essentiellement en affleurement la première partie de raccordement (16).

11. Balai d'essuie-glace à barre plate (12), en particulier pour un véhicule automobile, pour un dispositif de raccordement (10) selon l'une quelconque des revendications précédentes.
